# EUROPEAN PATENT APPLICATION

(11) **EP 4 813 734 A1**
(43) Date of publication of application: **30.09.2026**
(21) Application number: 26161193.3
(22) Date of filing: 27.02.2026
(51) Int. Cl.: B60L 53/62, B60L 53/63, B60L 53/64, B60L 53/66, B60L 53/67, B60L 53/68, B60L 58/12, G06F 16/901, G06N 5/022, G06N 20/00, G06Q 10/20

(54) **SYSTEM AND METHOD FOR MANAGING ELECTRIC VEHICLE CHARGING STATIONS**

(30) Priority: 27.03.2025 US 202519092040
(71) Applicant: Accenture Global Solutions Limited, Dublin 4 (IE)
(72) Inventor: KARUPPASAMY, Selvakuberan, 600100 Chennai (IN); VARGHESE, Vinu, 560043 Bangalore (IN); BM, Sunil Kumar, Bangalore (IN); KHARAT, Milind Pandurang, 400708 Navi Mumbai (IN); DUBAL, Ritesh, 400066 Mumbai (IN); KRISHNA MURTHY, Sangitha, 560061 Bangalore (IN); PRASAD, Sreevidya, 560102 Bangalore (IN); JOSYULA, Sreenivasa Sekhar, 560078 Bangalore (IN)
(74) Representative: Müller-Boré & Partner Patentanwälte PartG mbB

(57) **Abstract**

System and method for managing electric vehicle charging stations are disclosed. The method includes receiving, at an application server from a plurality of electrical vehicle (EV) charging stations, data including real-time operational data of the charging stations; predicting, by the at least one processor of the application server, based on the received data and using a knowledge graph, an issue or a need for maintenance of an EV charging station of the plurality of EV charging station; generating, by the at least one processor of the application server, an alert or notification to convey the issue or the need for maintenance of the identified EV charging station; and initiating, by the at least one processor of the application server, an action to resolve the issue or need of the identified EV charging station.

## Description

### TECHNICAL FIELD

The present disclosure generally relates to the field of electric vehicles and charging stations, and, more particularly, to a system and a method for managing electric vehicle charging stations.

### BACKGROUND

With the rising adoption of electric vehicles (EVs), the demand for charging stations is experiencing unprecedented growth. This surge in demand presents several operational challenges that may significantly impact operations of the charging stations, the electric vehicles and their users. One of the primary challenges is the inefficient utilization of charging stations. As demand fluctuates throughout the day, operators often fail to allocate their charging stations effectively. This mismanagement often results in some stations being underutilized during certain times, while others are overwhelmed, leading to inefficiencies. Such imbalances not only hinder operational effectiveness but also represent missed revenue opportunities for operators. Further, the lack of a well-managed system can lead to prolonged wait times for EV users. When charging stations are not optimally distributed or managed, users often find themselves queuing for access, which may lead to frustration. Long wait times can diminish the overall user experience and deter individuals from using that particular provider's services in the future. This situation creates a cycle of dissatisfaction that can adversely affect customer loyalty and retention.

Another significant concern is the potential overloading of station infrastructure. As more EVs connect to charging stations simultaneously, the existing infrastructure can become strained. This increased load may result in higher maintenance costs, reduced availability of charging services, and, in some cases, even temporary outages. Such disruptions not only inconvenience users but also pose challenges for operators who must maintain reliable service and manage operational costs. Further, the EV users have high expectations for real-time information regarding station availability, queue lengths, charging status, and estimated completion times. In today's fast-paced environment, users anticipate accurate and timely updates to make informed decisions about where to charge their vehicles. Failing to meet these expectations often leads to dissatisfaction, negatively impacting the provider's reputation and potentially driving users to competitors.

### SUMMARY

This summary is provided to introduce a selection of concepts in a simple manner that is further described in the detailed description of the disclosure. This summary is not intended to identify key or essential inventive concepts of the subject matter nor is it intended for determining the scope of the disclosure.

A method for managing electric vehicle charging stations is disclosed. The method includes: receiving, at an application server from a plurality of electrical vehicle (EV) charging stations, data including one or more of real-time operational data, real-time maintenance data, power consumption data, charging frequency data, voltage level data, and/or temperature sensor data; predicting, by at least one processor of the application server, based on the received data and using a knowledge graph, an issue or a need for maintenance of an EV charging station of the plurality of EV charging station; generating, by the at least one processor of the application server, an alert or notification to convey the issue or the need for maintenance of the EV charging station; and initiating, by the at least one processor of the application server, an action to resolve the issue or need of the identified EV charging station.

The method further includes receiving operational data of the EV, and determining, based upon the operational data of the EV, a EV charging station of the plurality of EV charging stations based upon a plurality of factors including a charging decision, cost efficiency, energy source reliability, traffic decision, time to charge a battery of the EV, a battery level of the EV, charging requirements of the EV, and proximity of the EV from the plurality of EV charging stations, and/or time efficiency, and recommending the determined EV charging station for charging of the EV.

The present disclosure further describes a system for implementing the methods provided herein. The present disclosure also describes computer-readable storage media coupled to one or more processors and having instructions stored thereon which, when executed by the one or more processors, cause the one or more processors to perform operations in accordance with the methods described herein.

It is appreciated that methods in accordance with the present disclosure can include any combination of the aspects and features described herein. That is, the method in accordance with the present disclosure are not limited to the combinations of aspects and features specifically described herein but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

Various embodiments in accordance with the present disclosure will be described with reference to the drawings, in which:
FIG. 1 depicts an example environment for managing electric vehicle charging stations, in accordance with an embodiment of the present disclosure;
FIG. 2 illustrates a block diagram of the system for managing the EV charging stations, in accordance with an embodiment of the present disclosure;
FIG. 3 is a table listing example attributes of the two charging stations, in accordance with an embodiment of the present disclosure;
FIG. 4 illustrates a selection process of a charging station, in accordance with an embodiment of the present disclosure;
FIG. 5 is a graph illustrating a method of detecting screen damage issues of charging stations, in accordance with an embodiment of the present disclosure;
FIG. 6 is a graph illustrating a method of detecting charging power issue of charging stations, in accordance with an embodiment of the present disclosure;
FIG. 7 is a graph illustrating a method of detecting anomalies in a charging station by comparing the attributes of the charging stations, in accordance with an embodiment of the present disclosure; and
FIG. 8 is a flowchart illustrating a method for managing the EV charging stations, in accordance with an embodiment of the present disclosure.

Like reference numbers and designations in the various drawings indicate like elements.

### DETAILED DESCRIPTION

In the following description, various embodiments will be illustrated by way of example and not by way of limitation in the figures of the accompanying drawings. References to various embodiments in this disclosure are not necessarily to the same embodiment, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" herein (e.g., "for example," "an example of," "by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of embodiments. However, it will be understood by one of ordinary skill in the art that embodiments may be practiced without these specific details. For example, systems may be shown in block diagrams so as not to obscure the embodiments in unnecessary detail. In other instances, well-known processes, structures, and techniques may be shown without unnecessary detail in order to avoid obscuring example embodiments.

The specification and drawings are to be regarded in an illustrative rather than a restrictive sense. It will, however, be evident that various modifications and changes may be made thereunto without departing from the broader spirit and scope of the invention as set forth in the claims.

To address the one or more limitations described in the background, embodiments of the present disclosure describe a system and method for managing electric vehicle charging stations. In one embodiment, the system uses a knowledge graph and real-time data of the plurality of EV charging stations to predict an issue or a need for maintenance of an EV charging station. Further, the system uses the real-time electric vehicle data, the knowledge graph and the real-time data of the plurality of EV charging stations to guide the electric vehicle to an optimal charging station for charging the electric vehicle.

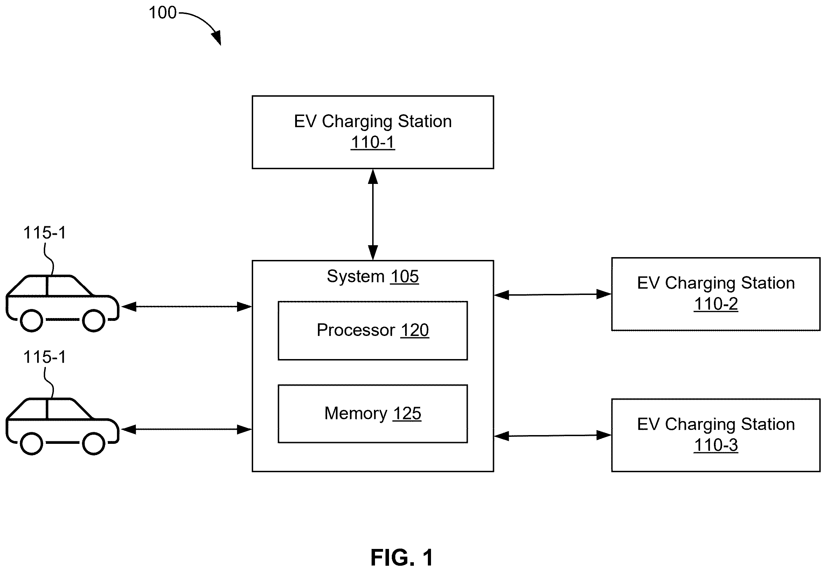

FIG. 1 depicts an example environment for managing electric vehicle charging stations, in accordance with an embodiment of the present disclosure. The environment 100 includes a system 105 for managing the EV charging stations, a plurality of electric vehicle charging stations 110-1, 110-2 and 110-3 (hereafter referred to as charging station(s) 110) and a plurality of electric vehicles 115-1 and 115-2 (hereafter referred to as EV 115). It is to be noted that the system 105, the plurality of charging stations 110 and the EVs 115 are communicatively connected through one or more communications networks. In some examples, the network may include a Local Area Network (LAN), a Wide Area Network (WAN), the Internet, or a combination thereof. In some examples, the network may be accessed over a wired and/or a wireless communication link.

Further, the system 105 is configured for managing the EV charging stations. In some examples, the system 105 may be implemented by way of a single device or a combination of multiple devices that may be operatively connected or networked together. The system 105 may be implemented in hardware or a suitable combination of hardware and software. The "hardware" may include a combination of discrete components, an integrated circuit, an application-specific integrated circuit, a field-programmable gate array, a digital signal processor, or other suitable hardware. The "software" may include one or more objects, agents, threads, lines of code, subroutines, separate software applications, two or more lines of code, or other suitable software structures operating in one or more software applications. Referring to FIG. 1, the system 105 includes a processor 120 and a memory 125 communicably coupled to the processor 120. The processor 120 may include one or more processors. Examples of the processor 120 may include, but are not limited to, microprocessors, microcomputers, microcontrollers, digital signal processors, central processing units, state machines, logic circuits, and/or any devices that manipulate data or signals based on operational instructions. Among other capabilities, the processor 120 may fetch instructions (also be referenced to as processor-executable instructions or machine-executable instructions) from the memory 125 and execute the fetched instructions for performing operations according to the present disclosure. The memory 125 may be non-volatile or non-transitory computer-readable medium (CRM) such as, a magnetic disk or solid-state non-volatile memory or volatile medium such as Random Access Memory (RAM), and/or the like.

It is to be noted that a single system 105 is shown and the system 105 is configured to monitoring a plurality of charging stations and a plurality of electric vehicles. However, a given geographical area may include multiple such systems or subsystems (also referred to as control towers) connected to a main system to operate a plurality of charging stations and a plurality of electric vehicles within the geographical area.

The EV charging stations 110 include several key components that work together to provide power to the electric vehicles 115, to measure real-time operations data of the charging stations 115 and to enable communication between the charging stations 110 and the system 105. For example, a charging station 110 includes a charging unit which may be classified into Level 1, Level 2, and DC Fast Charging units, power supply units and/or solar supply units, user interface, control and communication systems for monitoring the charging process, monitoring the status of the EV, and communicating with the vehicle to ensure safe and efficient charging, payment processing systems, one or more sensors for measuring temperature, voltage and current levels, network components to communicate with the system 105 and other servers and computing systems, etc. Further, each charging station premises may include one or more cameras and associated systems for monitoring the vehicle density at the charging station.

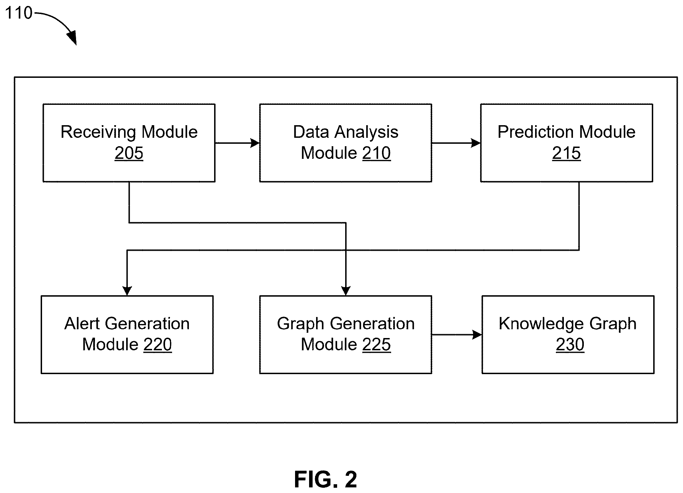

FIG. 2 illustrates a block diagram of the system for managing the EV charging stations, in accordance with an embodiment of the present disclosure. In addition to the processor 120 and memory 125 shown in FIG. 1, the system 105 includes a receiving module 205, a data analysis module 210, a prediction module 215, an alert generation module 220, a graph generation module 225 and a knowledge graph 230.

Referring to FIG. 1 and FIG. 2, the receiving module 205 is configured to receive real-time data from the plurality of charging stations 110. The real-time data includes, but is not limited to, real-time operational data, real-time maintenance data, power consumption data, charging frequency data, voltage level data, and temperature sensor data. The real-time operational data includes information about the status of the charging stations, including whether the charring stations are online or offline, active charging sessions, and error statuses, and such data may be obtained from the control units and network connectivity sensors of the charging stations. Further, the real-time maintenance data such as wear and tear data, and scheduled maintenance data may be obtained from the diagnostic tools and software logs of the charging stations. Furthermore, the power consumption data may be obtained from the power meters, the charging frequency data may be obtained from the usage tracking systems, the voltage level data may be obtained from the voltage sensors, and the temperature sensor data may be obtained from thermocouples or any temperature sensors. Such sensors and systems provide operational data of the charging stations, allowing for real-time monitoring.

Upon receiving the real-time data from the charging stations 110, the data analysis module 210 analyses the received data. In one embodiment of the present disclosure, the data analysis module initially performs data cleansing and data denoising on the received data to identify and manage missing data and to correct error if any. In one implementation, the data analysis module 210 uses statistical methods such as Z-score or Interquartile Range (IQR) to detect and remove outliers, especially in sensor readings such as voltage, current, and temperature, which could otherwise mislead predictive models. The analysis may further include normalization to make the data uniform, error correction using domain knowledge, correcting duplicates based on timestamp and sensor IDs, data validation to ensure data consistency, etc.

In one embodiment, upon analyzing the received data, the prediction module 215 predicts an issue or a need for maintenance of a charging station using a knowledge graph 230. In one embodiment of the present disclosure, the knowledge graph 230 is a constrained knowledge graph generated by the graph generation module 225 using historical data of the plurality of EV charging stations and by establishing a relationship between the plurality of charging stations 110. The historical data as described herein refers to the data received from the plurality of charging stations 110, which includes historical operational data, historical maintenance data, power consumption data, charging frequency data, voltage level data, and/or temperature sensor data. The constrained knowledge graph as described herein refers to a graph in which the nodes and the edges are governed by specific constraints or attributes. These constraints define the properties of the graph elements, influencing their relationships and interactions. For example, nodes represent EV charging stations with attributes such as capacity, location, utilization, etc. The edges define relationships between nodes, such as distance, travel time, and queue times. The constraints limit or structure the graph, ensuring it models the real-world system effectively.

In one embodiment, the graph generation module 225 uses the data analysis module 210 to preprocess the historical data by data cleansing and data denoising to identify and manage missing data and to correct error if any. In one implementation, the data analysis module 210 uses statistical methods such as Z-score or Interquartile Range (IQR) to detect and remove outliers, especially in sensor readings such as voltage, current, and temperature, which could otherwise mislead predictive models. The analysis may further include normalization to make the data uniform, error correction using domain knowledge, correcting duplicates based on timestamp and sensor IDs, data validation to ensure data consistency, etc. Further, the data analysis module 210 identifies one or more patterns, one or more anomalies, and/or one or more trends by analyzing the historical data.

Upon preprocessing, the graph generation module 225 performs event log categorization and feature extraction to create the knowledge graph 230. That is, the graph generation module 225 groups errors and warnings (anomalies) into categories and labels the root causes of known past failures to facilitate root-cause analysis and prediction. In one implementation, artificial intelligence models are used for grouping and categorization. For example, the error messages logged by the charging stations 110 may be used to categorize the errors such as "Hardware Failures", "Network Issues", "Maintenance Alerts", "Station Downtime", etc., and the root cause may be "Power Surge," "User Operation," or "Software Bug," etc. Further, the historical data such as, voltage and temperature readings, are used to create lagged features to capture temporal relationships and trends. For example, trends such as increased load during certain hours, seasonal effects to analyze load patterns over time, etc. In another example, the knowledge graph 230 may include relationships mapping patterns and anomalies to recommended maintenance actions. That is, maintenance action may be tagged to a charging station for every hundred charging sessions. Further, time-based features are created using historical readings. For example, voltage or temperature are recorded at specific intervals (e.g., every minute) and lagged versions are used for these readings to understand how past values influence current behavior. Furthermore, rolling averages, maximums, and counts are computed for metrics such as charge time, usage frequency, and downtime over predefined time window. For example, a rolling average of charging time facilitates in assessing performance stability of a charging station. It is to be noted that the data may be aggregated hourly basis, daily basis, weekly basis, etc., to derive various insights from the data received from the plurality of charging stations.

As described herein, for each charging station, among the plurality of charging stations 110, all the attributes and values are recorded. Further details such as location of the charging stations, type of chargers supported by the charging stations, power output status, etc., are obtained from the user or from the one or more sensors deployed in the charging stations. Then the graph creation module 225 creates a knowledge graph 230, in which the nodes represent the charging stations 110 and the edges represent relationship between the charging stations 110. In the knowledge graph 230, the constraints associated with the nodes include, but are not limited to, charging station ID, location, capacity, status, utilization, downtime history, average charging time, energy source, traffic intensity, price per kWh and last maintenance data. Further, the constraints associated with the edges include distance between the two charging stations, average travel time, charging queue time, etc. Hence, the knowledge graph 230 is created by linking charging stations 110, usage data, and historical issues associated with the charging stations 110. In one embodiment of the present disclosure, the knowledge graph 230 is generated using a graph network trained using a machine-learning model.

Below is an exemplary knowledge graph embeddings in accordance with an embodiment of the present disclosure.
- Example Feature Vector for Node A:
- [12.91, 77.60, 200, 80, 30, 1 (Solar + Grid), 2 (Moderate Traffic)].
   [12.91, 77.60] - indicates Latitude and longitude of the charging station.
   [200, 80] - indicates Number of charging points and Charging speed (kW).
   [30, 1 (Solar + Grid)] - indicates the energy source, where 1 could represent a combination of solar and grid power.
   [2] - Indicates traffic levels, with 2 possibly representing moderate traffic.
- Edge Feature Vector for A <> B:
- [8, 15, 10]
   8 - represent the physical distance (e.g., kilometers or miles) between A and B.
   15 - indicate the average travel time (e.g., minutes) to get from A to B.
   10 - indicates the estimated travel cost for traveling between A and B.

Such embeddings are used for clustering or predictions (e.g., Node2Vec or Graph Neural Networks).

Relationship between the two nodes (charging stations) may be:
- Queue Management:
   - Node A has higher utilization (80%) > Longer queues
   - Node B's lower utilization (60%) > Faster processing
- Energy Source Dynamics:
   - Node A: Solar-dependent > Fluctuations in speed during low solar availability.
   - Node B: Pure grid > Consistent charging speed

In one embodiment of the present disclosure, a dynamic layer is added to the knowledge graph 230, making a multi-dimensional knowledge graph. That is, dynamic attributes associated with the nodes (charging stations) and the edges are identified and real-time data is fed and updated using one or more APIs and sensors. For example, the dynamic attributes associated with the nodes may include, but are not limited to, current (real-time) utilization, queue time, vehicle density near the charging stations, etc. Further, the dynamic attributes associated with the edges may include, but are not limited to, traveling time between the nodes, traffic intensity, etc. The values of such attributes may be obtained from the one or more sensors and APIs. For example, the traffic data may be obtained from the map service provider APIs, the queue time may be obtained from the cameras installed at the charging stations 110, the current utilization data of the charging stations may be obtained from the system associated with the charging stations 110.

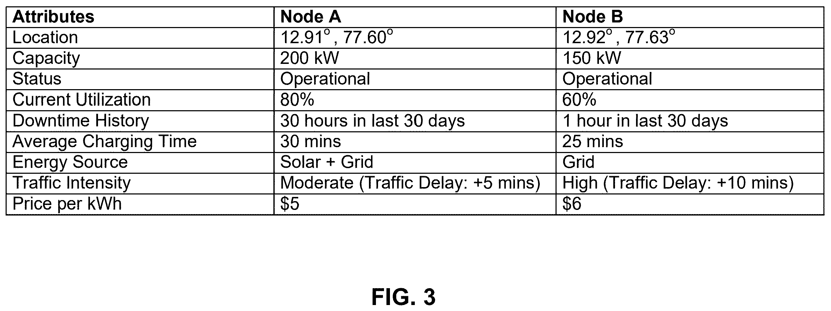

FIG. 3 is a table listing example attributes of the two charging stations, in accordance with an embodiment of the present disclosure. The distance, the average travel time and the charging queue time are the attributes of the edges, wherein the distance is a fixed attribute and the average travel time, and the charging queue time are the dynamic attributes which may be obtained in real-time or periodically.

As described in the present disclosure, the system 105 utilizes the real-time operational data of the plurality of the charging stations 110 and the knowledge graph 230 to predict an issue or a need for maintenance of a charging station among the plurality of charging stations 110. Referring to FIG. 2, upon receiving the real-time data from the charging stations 110, the data analysis module 210 analyses data by performing data cleansing and data denoising. The cleaned and denoised data is then provided as input to the prediction module 215. In one embodiment, the prediction module 215 identifies one or more patterns, one or more anomalies, and/or one or more trends by analyzing the received data, and predicts, based upon the identifying and knowledge inferenced from the knowledge graph 230, the issue or the need for maintenance of the one or more charging stations 110. For example, upon receiving the data on usage frequency and charging sessions, the prediction module 215 may predict a possible maintenance session for a given charging station using the knowledge inferred from the knowledge graph 230. In one example, the input data to the system 105 is the usage frequency (number of sessions per day), the charging session data (duration, energy dispensed). Upon receiving the data, the data is normalized to ensure consistency, for example, by converting timestamps to a standard format. Then the prediction module 215 computes relevant metrics such as total sessions over specific periods (daily, and/or weekly) and average charging times, and queries the knowledge graph 230 to retrieve the charging station's operational history, and patterns related to usage frequency and maintenance triggers, for example, "stations with over a hundred session in a month often require maintenance." Then the prediction module 215 utilizes inference rules based on the knowledge graph. The inference rule may be "If a station exceeds ninety sessions in a month, check for maintenance needs." Hence, based on the insights gained from the knowledge graph 230 and the patterns identified from the received data, the prediction module 215 predicts the likelihood of maintenance needs. For example, if the current usage frequency exceeds the established threshold and past data shows a pattern of issues arising at similar frequencies, the prediction module 215 flags the station for potential maintenance and the alert generation module 220 generates an alert to convey the need for maintenance of the identified charging station. An example of such alert may be "Charging Station A is predicted to require maintenance within the next five days based on current usage trends" and such alerts are communicated to one or more predefined user devices and/or to the system associated with the charging station. Furthermore, the prediction module 215 is configured to initiate an action based on the issue or the need for maintenance. In the given example, the action may include pushing a software update to the system associated with the charging station A. In one embodiment, the graph generation module 225 uses the post-maintenance data to update the knowledge graph 230 and/or to refine the inference rules and improve future predictions.

As described herein, the prediction module 215 generates actionable insights for operators, such as scheduling maintenance sessions or sending notifications for preventive checks. Such insights may be supported by visualizations showing the correlation between usage patterns and maintenance needs, enhancing decision-making by the operation.

In one embodiment of the present disclosure, the system 105 is further configured to use the real-time electric vehicle data, the knowledge graph 230 and the real-time data of the plurality of charging stations to guide the electric vehicle to an optimal charging station for charging the electric vehicle. For this, the system 105 receives operational data of the EV, and determines a charging station of the plurality of charging stations 110 based upon the operational data of the EV and a plurality of factors. The plurality of factors may include a charging decision, cost efficiency, energy source reliability, traffic decision, time to charge a battery of the EV, a battery level of the EV, charging requirements of the EV, and proximity of the EV from the plurality of EV charging stations, and/or time efficiency. Such factors may be derived from the EV and/or derived from the static and dynamic attributes of the charging stations 110. Upon determination, that is, upon selecting an optimal charging station for the EV, the system 105 recommends the selected charging station for charging of the EV.

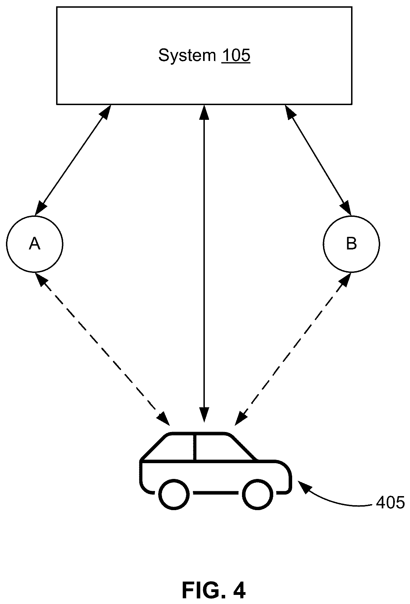

FIG. 4 illustrates a selection process of a charging station, in accordance with an embodiment of the present disclosure. As shown, an electric vehicle 405 that requires charging communicates with the system 105 requesting for an allocation of a charging station. In an embodiment, a user of the EV 405 may raise a request, or the EV 405 may be configured to raise a request based on the charge level of the EV 405. The request may include parameters such as current charge level of the EV 405, location of the EV 405, charger type compatibility, etc. Upon receiving the request, the system 105 identifies one or more charging stations (for example charging stations A and B) based on the parameters received from the EV 405 and the fixed attributes and dynamic attributes of the charging stations such as location, charger type, availability, etc. Considering that the distance between the EV 405 and both the charging stations A and B are equal, the prediction module 215 checks for the dynamic attributes such as queue time and real-time traffic data, wherein such value for the attributes may be obtained from the IoT sensors at the charging stations and the map APIs. Now considering:
- Charging Time at Node A = 30 mins, Queue Time = 10 mins and Travel Time = 15, the total time for charging the EV will be = 55 mins
- Charging Time at Node B = 25 mins, Queue Time = 5 mins and Travel Time = 15, the total time for charging the EV will be = 45 mins

Considering the values of static and dynamic attributes from the knowledge graph 230, the prediction module 215 predicts that the Node B is an optimal node for charging the EV 405 and recommends the same to the user of the EV 405.

As described in the present disclosure, the system 105 utilizes the real-time operational data of the plurality of the charging stations 110, and the knowledge graph 230 to predict an issue or a need for maintenance of a charging station among the plurality of charging stations 110. Further, the system 105 uses the real-time vehicle data to recommend a charging station for charging an electric vehicle.

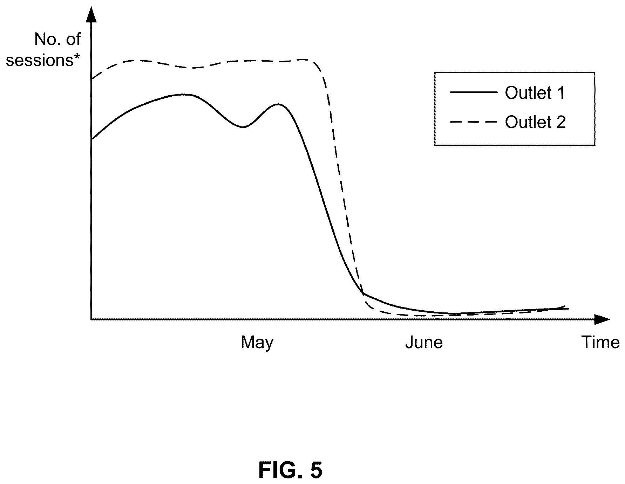

FIG. 5 is a graph illustrating a method of detecting screen damage issues of charging stations, in accordance with an embodiment of the present disclosure. As shown, the number of charging sessions is dropped at two charging stations (outlet 1 and outlet 2). In such as event, the system 105 verifies the connectivity issues by monitoring heartbeat signals from both the charging stations. Considering that no connectivity issues and no error code received from the charging stations, the prediction module 215 infers from the knowledge graph 230 to predict the screen damage issues, wherein the knowledge graph 230 indicates the probability of screen damage issues as 85% and mainboard issues as 15%. Upon detection, the alert generation module 220 generates an alert to communicate to the operators of the charging stations and also initiates an action to schedule the service.

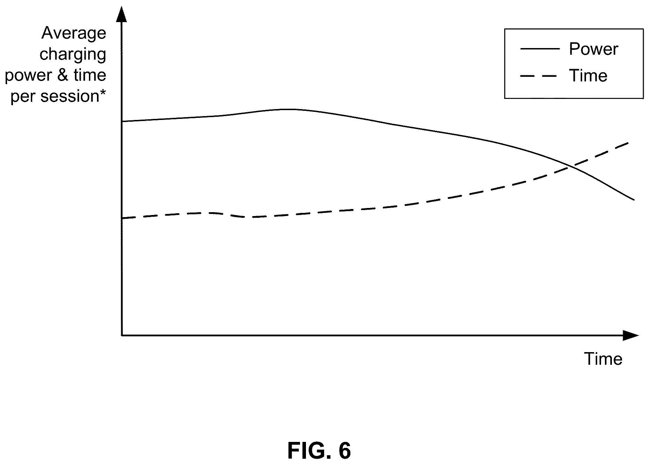

FIG. 6 is a graph illustrating a method of detecting charging power issue of charging stations, in accordance with an embodiment of the present disclosure. The graph is plotted for average charging power and time per session for a charging station. To detect the charging power issue, the charging power and time per session is measured over a period of time, for example two days. As shown, the charging power is decreasing and charging time is increasing for the measure period. Considering that there is no error code received from the charging station, the prediction module 215 infers from the knowledge graph 230 and predicts the load management issues and issues with power electronic of the charging station.

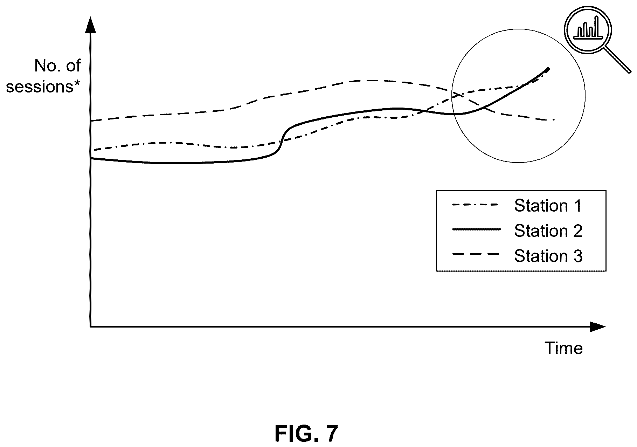

FIG. 7 is a graph illustrating a method of detecting anomalies in a charging station by comparing attributes of the charging stations, in accordance with an embodiment of the present disclosure. In this example, number of charging sessions at three charging stations (stations 1, 2 and 3) are measured for a predefined time period. The session data indicates that the number of sessions is increasing at charging stations 1 and 2 and decreasing at charging station 3. Upon detecting such pattern, the prediction module 215 uses the knowledge from the knowledge graph 230 to predict anomalies such as station maintenance issues, display issues, etc. Similarly, the system 105 is configured to various other issues and anomalies, including but are not limited to, usability and utilization of the EV charging station, authentication issues, slow or poor charging issue, and/or a payment related issue. Any other such issues may be predicted by analyzing the real-time operational data from the charging stations and using the multi-dimensional knowledge graph.

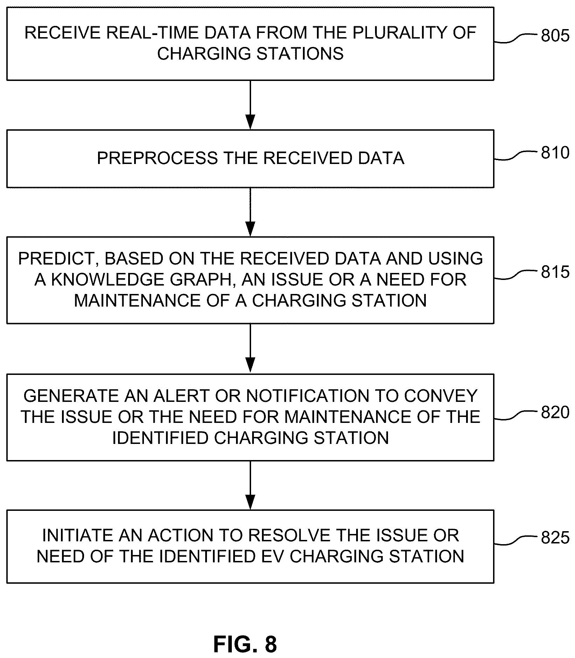

FIG. 8 is a flowchart illustrating a method for managing the EV charging stations, in accordance with an embodiment of the present disclosure. At step 805, the system 105 receives real-time data from the plurality of charging stations 110. The data includes, but are not limited to, data including one or more of real-time operational data, real-time maintenance data, power consumption data, charging frequency data, voltage level data, and/or temperature sensor data.

At step 810, the system 105 preprocess the received data. The preprocessing includes, performing data cleaning and denoising, event logs categorization, temporal feature engineering, and/or a feature selection. The preprocessing further includes, identifying one or more patterns, one or more anomalies, and/or one or more trends by analyzing the received data.

Upon preprocessing, the system 105 predicts an issue or a need for maintenance of one or more charging stations among the plurality of charging stations 110, as shown at step 815. In one embodiment, the system 105 uses the received data and the knowledge graph 230 to predict the issue or the need for maintenance. In one embodiment, the knowledge graph 230 is generated using historical data pertaining to the plurality of charging stations and the real-time data of the plurality of charging stations and hence includes both the static attributes and dynamic attributes.

Then the system 105 generates an alert or notification to convey the issue or the need for maintenance of the identified charging station, as shown at step 820. The alerts generated are communicated to system associated with the charging stations and/or to one or more user devices associated with the operators of the charging station. Further, the system 105 initiates an action to resolve the issue or need of the identified charging station as shown at step 825, wherein the actions may include but are not limited to restarting the charging station, software updating, raising tickets to assign a technician, etc.

It is to be noted that based on detection of one or more issues, the charging stations may be remotely operated to restart the system, to shut down the stations till the issue is rectified, etc. This ensures the reliability and availability of charging stations by proactively identifying and addressing potential equipment failures, and technical issues. Further, the disclosed method increases the customer satisfaction and retention by providing reliable and accessible charging services, thereby fostering the adoption of electric vehicles and promoting sustainable transportation. Furthermore, the system and method reduce maintenance costs and operational expenses by implementing proactive maintenance strategies, optimizing resource allocation, and minimizing unplanned maintenance activities. Furthermore, the system and method streamline the operational management by integrating predictive maintenance insights into the decision-making process, enabling data-driven strategies for long-term infrastructure planning and development.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all the functional operations described in this specification may be realized in a generic classical processor system and a quantum computing system.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
receiving, at an application server from a plurality of electrical vehicle (EV) charging stations, data including one or more of real-time operational data, real-time maintenance data, power consumption data, charging frequency data, voltage level data, and/or temperature sensor data;
predicting, by at least one processor of the application server, based on the received data and using a knowledge graph, an issue or a need for maintenance of an EV charging station of the plurality of EV charging station;
generating, by the at least one processor of the application server, an alert or notification to convey the issue or the need for maintenance of the EV charging station; and
initiating, by the at least one processor of the application server, an action to resolve the issue or need of the identified EV charging station.

2. The computer-implemented method of claim 1, wherein the method comprises, preprocessing the received data and identifying one or more patterns in the preprocessed received data.

3. The computer-implemented method of claim 1 or 2, wherein the knowledge graph is generated based upon historical data of the plurality of EV charging stations and relationships between a plurality of EV charging stations, each EV charging station representing a node of the knowledge graph, wherein the knowledge graph is a multi-dimensional knowledge graph.

4. The computer-implemented method of claim 3, wherein the knowledge graph is generated by a graph network trained using a machine-learning model; and/or
wherein generating knowledge graph comprises:
preprocessing the historical data by performing data cleaning and denoising, event logs categorization, temporal feature engineering, and/or a feature selection;
identifying, by at least one processor of the application server, one or more patterns, one or more anomalies, and/or one or more trends by analyzing the historical data; and
generating the knowledge graph based on the identified one or more patterns, the one or more anomalies, and/or one or more trends relationship between the plurality of nodes.

5. The computer-implemented method of any one of claims 1 to 4, wherein predicting the issue or the need for maintenance of the EV charging station comprises:
preprocessing the received data by performing data cleaning and denoising, event logs categorization, temporal feature engineering, and/or a feature selection;
identifying, by at least one processor of the application server, one or more patterns, one or more anomalies, and/or one or more trends by analyzing the received data; and
analyzing, based upon the identifying and knowledge inferenced from the knowledge graph, predicting the issue or the need for maintenance of the EV charging station;
wherein predicting the issue or the need for maintenance of the EV charging station optionally further comprises: computing usability and utilization of the EV charging station.

6. The computer-implemented method of any one of claims 1 to 5, wherein the issue or the need for maintenance of the EV charging station comprises one or more of: a screen damage, an authentication issue, a power electronic issue, a slow or poor charging issue, and/or a payment related issue.

7. The computer-implemented method of any one of claims 1 to 6, further comprising:
communicating, by the application server with an EV, to receive operational data of the EV;
determining, based upon the operational data of the EV and by the at least one processor of the application server, an EV charging station of the plurality of EV charging stations based upon a plurality of factors, wherein the plurality of factors includes a charging decision, cost efficiency, energy source reliability, traffic decision, time to charge a battery of the EV, a battery level of the EV, charging requirements of the EV, and proximity of the EV from the plurality of EV charging stations, and/or time efficiency; and
communicating, by the application server with the EV, the determined EV charging station for charging of the EV.

8. A system comprising:
at least one memory configured to store machine-executable instructions; and
at least one processor communicatively coupled with the at least one memory, and configured to execute the machine-executable instructions to perform operations comprising:
receiving, from a plurality of electrical vehicle (EV) charging stations, data including one or more of real-time operational data, real-time maintenance data, power consumption data, charging frequency data, voltage level data, and/or temperature sensor data;
predicting, based on the received data and using a knowledge graph, an issue or a need for maintenance of an EV charging station of the plurality of EV charging station;
generating an alert or notification to convey the issue or the need for maintenance of the identified EV charging station; and
initiating an action to resolve the issue or need of the identified EV charging station.

9. The system as claimed in claim 8, wherein the processor is further configured to preprocess the received data and identify one or more patterns in the preprocessed received data.

10. The system of claim 8 or 9, wherein for the knowledge graph is generated based upon historical data of the plurality of EV charging stations and relationships between a plurality of EV charging stations, each EV charging station representing a node of the multi-dimensional knowledge graph; and/or
wherein the knowledge graph is generated by a graph network trained using a machine-learning model.

11. The system of claim 10, wherein generating knowledge graph comprises:
preprocessing the historical data by performing data cleaning and denoising, event logs categorization, temporal feature engineering, and/or a feature selection;
identifying, by at least one processor of the application server, one or more patterns, one or more anomalies, and/or one or more trends by analyzing the historical data; and
generating the knowledge graph based on the identified one or more patterns, the one or more anomalies, and/or the one or more trends relationship between the plurality of nodes.

12. The system of any one of claims 8 to 11, wherein for predicting the issue or the need for maintenance of the EV charging station, the operations further comprise:
preprocessing the received data by performing data cleaning and denoising, event logs categorization, temporal feature engineering, and/or a feature selection;
identifying, by at least one processor of the application server, one or more patterns, one or more anomalies, and/or one or more trends by analyzing the historical data; and
analyzing, based upon the identifying and knowledge inferenced from the knowledge graph, predicting the issue or the need for maintenance of the EV charging station.

13. The system of any one of claims 8 to 12, wherein for predicting the issue or the need for maintenance of the EV charging station, the operations further comprise computing usability and utilization of the EV charging station; and/or
wherein the issue or the need for maintenance of the EV charging station comprises one or more of: a screen damage, an authentication issue, a power electronic issue, a slow or poor charging issue, and/or a payment related issue.

14. At least one non-transitory computer-readable media (CRM) comprising machine-executable instructions stored thereon, which when executed by at least one processor of a computing device cause the computing device to perform operations comprising:
receiving, at an application server from a plurality of electrical vehicle (EV) charging stations, data including one or more of real-time operational data, real-time maintenance data, power consumption data, charging frequency data, voltage level data, and/or temperature sensor data;
predicting, by the at least one processor of the application server, based on the received data and using a knowledge graph, an issue or a need for maintenance of an EV charging station of the plurality of EV charging station;
generating, by the at least one processor of the application server, an alert or notification to convey the issue or the need for maintenance of the identified EV charging station; and
initiating, by the at least one processor of the application server, an action to resolve the issue or need of the identified EV charging station.

15. The at least one non-transitory CRM of claim 14, wherein the machine-executable instructions stored thereon, which when executed by the at least one processor of the computing device cause the computing device to perform operations comprising:
communicating, by the application server with an EV, to receive operational data of the EV;
determining, based upon the operational data of the EV and by the at least one processor of the application server, an EV charging station of the plurality of EV charging stations based upon a plurality of factors, wherein the plurality of factors includes a charging decision, cost efficiency, energy source reliability, traffic decision, time to charge a battery of the EV, a battery level of the EV, charging requirements of the EV, and proximity of the EV from the plurality of EV charging stations, and/or time efficiency; and
communicating, by the application server with the EV, the determined EV charging station for charging of the EV.
